# EUROPEAN PATENT APPLICATION

(11) **EP 3 214 586 A1**
(43) Date of publication of application: **06.09.2017**
(21) Application number: 16158595.5
(22) Date of filing: 04.03.2016
(51) Int. Cl.: G06Q 10/00

(54) **METHOD FOR MAINTENANCE SUPPORT AND MAINTENANCE SUPPORT SYSTEM**

(71) Applicant: Thales Deutschland GmbH, 71254 Ditzingen (DE)
(72) Inventor: AREZKI, Amine, 70825 Korntal-Münchingen (DE); BLAISE, Sébastien, F-06600 Antibes (FR)
(74) Representative: Kohler Schmid Möbus Patentanwälte

(57) **Abstract**

A method for maintenance support comprising interaction between an maintainer at an maintenance area and an expert at a remote located expert, wherein the method comprises the following steps:
• detection of an object to be maintained by analyzing video data generated by a head mounted camera;
• streaming of the video data from the maintainer to the expert;
• transmission of support data from the expert to the maintainer;
is characterized in that the support data comprise pointer data for creating a pointer to be displayed to the maintainer, wherein the pointer is assigned to the detected object, and the pointer is displayed at a see-through display of augmented reality glasses.

## Description

### Background of the invention

The invention concerns a method for maintenance support comprising interaction between a maintainer at a maintenance area and a remote located expert, wherein the method comprises the following steps:
- detection of an object to be maintained by analyzing video data generated by a head mounted camera;
- streaming of the video data from the maintainer to the expert;
- transmission of support data from the expert to the maintainer.

The invention also concerns a maintenance support system for performing the method.

An according support method is known from US 8 373 618 B2.

Within a complex infrastructure of a railway system the failure of a single component, such as a signal, can turn down large parts of the whole system. In practice, involved suppliers often have difficulties to understand technical problems onsite in order to well support their customers. That means railway network operators have to send experts on site, leading to very slow reaction times. Additionally, maintenance personnel usually have to take care of a lot of different products from different suppliers.

US 8 373 618 B2 describes an augmented-reality system for support of interaction between a user and an engineering apparatus. The user wears augmented reality glasses (AR-glasses) for recording real information, for example the initial state of a part which is to be produced. The system uses this information to ascertain predefined instruction data which are dedicated to the product to be produced and displays them for the user in a mobile device, such as a hand-held PC or data googles. Yet, this requires a very specific development of the procedures to be applied per product and per situation.

### Object of the invention

It is therefore an object of the invention to provide a maintenance support method for effective and quick maintenance, wherein increased flexibility is given and more clear and precise instructions can be provided to the operator.

### Description of the invention

This object is solved by a method according to claim 1 and a maintenance support system according to claim 6.

According to the invention the support data comprise pointer data for creating a pointer to be displayed to the maintainer, wherein the pointer is assigned to the detected object, and the pointer is displayed at a see-through display of augmented reality glasses.

"Detection of the object" comprises the localization of the object. The position of the object to be maintained within the video images is determined.

A "Pointer" is a displayed element defined by the pointer data. A pointer can be of different types, e.g. arrow, finger, screw driver, text, etc.

The detected "object" may be a whole apparatus or an area of interest (e.g. an operation panel) which is only a part of an apparatus.

According to the invention the pointer assigns information to be displayed with the object to be maintained, i.e. pointer and information to be displayed are linked to each other. In contrast to the state of the art, the interaction between the expert and the maintainer comprises creation of a pointer by the expert and displaying the pointer at the maintainer's see through display.

A see through display is an electronic display that allows the user to see what is shown on the glass screen while still being able to see through it. I.e. in the present case only the pointer is displayed on the glasses and is therefore superimposed with the real object. Thus, full visibility is provided to the maintainer while the maintainer has his hands free for operational trouble shooting. The assigning of the pointer to the object comprises live detection, i.e. as the maintainer's head moves the object is detected again immediately and the pointer data are adapted accordingly, so that at any time the maintainer sees the pointer pointing to the same object.

In a highly preferred variant detection of the object and verification of the pointer data (and adaption if necessary) is carried out permanently.

Thus, not only predefined instructions on the object to be maintained can be displayed, but live support with direct pointing and live guidance is possible thereby enabling detailed situation-specific instructions including indication of the respective object.

Pointer data according to the invention differs from "support data" known from the state of the art in that the pointer data is assigned to the detected object by mapping the object from the expert's display to the real object and keeping the tracking of the pointer even if the head (and therewith the camera) is moving. I.e. when the expert points to a certain area of the image from his expert center, the pointer is displayed on the see through display, points to the real object in the maintenance area and is fixed to the object independent of the movement of the camera.

This mapping/assignment is preferably realized by generating camera-related 3D-coordinates of the location of the detected object at the maintenance area during detection, transmitting the camera-related 3D-coordinates to the expert, transforming the camera-related 3D-coordinates to display-related coordinates, and transmitting the display-related coordinates to the maintenance area for displaying the pointer data. I.e. the object is detected by determining 3D coordinates of the object in relation to the camera (i.e. in a coordinate system of the camera). The camera-related 3D-coordinates are sent to the expert PC and also the 3D model (detected object). Since normally the position of the see-through display does not comply with the position of the camera, the camera-related 3D coordinates have to be transformed to display-related 3D coordinates in order to display the pointer at the see-through display at the right place. This is done by coordinate transformation from the camera coordinate system to the display coordinate system(s).

In a highly preferred variant detection of the object comprises identification of the object. "Identification" means determining what kind of object is to be maintained. If the object to be maintained is identified, information concerning the object can be received from a data base.

It is preferred that the object is provided with a defined marker, in particular a QR-code, and the object is detected by detecting the marker by means of the camera. This is particularly advantageous for maintaining objects which are not listed in a data base, and can therefore not be identified (e.g. cables, switch buttons etc.). Detection of such objects is enabled by providing the objects with a marker. Thus the expert is enabled to guide the maintainer during troubleshooting also with objects not listed in the data base.

The data (video data and/or support data) is preferably transmitted wirelessly, in particular via WIFI or LIFI. Data transmission via LIFI is in particular interesting for electromagnetic-sensitive and security-critical areas.

The maintenance support system according to the invention comprises a head-mountable camera, a head-mountable see-through display, means for analyzing video data, means for streaming video data and transmitting pointer data, and a computer for displaying streamed video data. The inventive system can be implemented easily to existing installations

In a highly preferred embodiment of the inventive maintenance support system the camera and the see-through display are parts of AR-glasses.

By linking a pointer to the object to be maintained and for which support is required and by displaying the pointer on a see through display the present invention reduces the downtime due to efficient failure analysis and troubleshooting. Continuous refresher training is done during operation. Support can be given for an arbitrary number of objects (not limited by a data baser) by providing situation specific live instructions comprising precise assignment between instructions and the corresponding object.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawing.
- FIG. 1: shows the method steps of the inventive maintenance support method.
- FIG. 2: shows an operator during maintenance work at an object to be maintained by using the maintenance support system according to the invention.
- Fig. 3: shows the operator's real view.
- Fig. 4: shows a remote expert and his view of streamed video data.
- Fig. 5: shows the arrangement of real object, camera-coordinate system and the display coordinate systems.

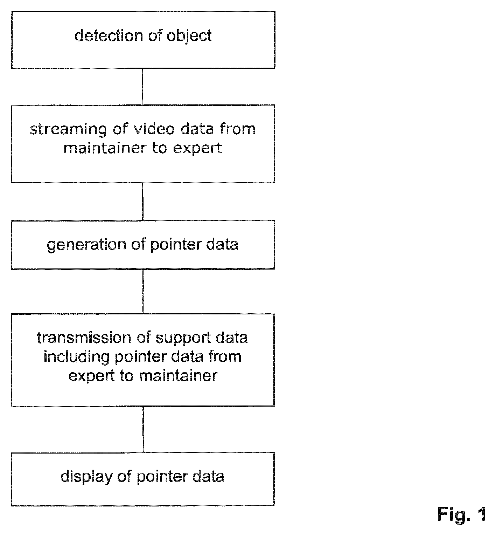

The basis method steps are shown in **Fig. 1****.** First an object **1, 1'** to be maintained is detected by analyzing video data generated by a head mounted camera **2;** The video data is streamed from a maintainer **3** to the expert **4.** The expert 4 generates pointer data which is sent to the maintainer 3. A pointer **15', 15a, 15b** according to the pointer data is then displayed at a maintainer's see through display **6.**

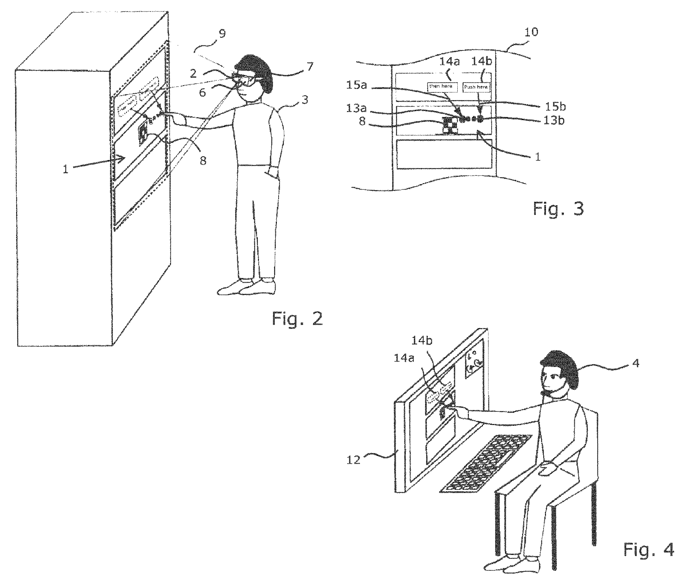

**Fig. 2** and **4** shows the maintainer 3 and the expert 4 at their respective working places. The maintainer wears AR-glasses **7** which comprise the camera 2 and the see through display 6. The maintainer's real view 10 is presented in **Fig. 3****.** Here the object is detected according to a special variant of the inventive method by using a marker **8.** The object 1 (here:electronic subrack) is provided with the marker 8 (QR code). In principle any object can be detected as long as the marker 8 is there in order to be able to use remote pointers. The marker 8 may be fixed by the maintainer 3 when he wants to have a remote support. The marker 8 is used as a reference in order to be able to make pointing on surrounding areas (here: buttons **13a, 13b**). A video stream of a pick-up area **9** which is part of the maintainer's real view 10 is generated by the camera 2. The marker 8 serves to calibrate the pick-up area 9 (calibrated area). Thus the electronic subrack 1 is detected with the aid of the QR-code 8 by means of the camera 2 of the AR-glasses 7 (video data). 3D camera-related coordinates of the object 1, which are related to a camera coordinate system **11** (see **Fig**. **5**) are generated and transmitted (live-streamed) together with the video data to the expert 4 via a wireless connection (e.g. 3G, WIFI, LIFI). In addition to video data, also audio data can be transmitted between maintainer 3 and expert 4. The video data is displayed at a monitor **12** of an expert support desk (Fig. 4). The expert 4 selects areas of the picture (here: buttons 13a, 13b of the electronic subrack 1) displayed at the monitor 12 to which support data **14a, 14b, 15a, 15b** shall be displayed to the maintainer 3. According to the invention the support data 14a, 14b, 15a, 15b comprises pointer data. The expert 4 also selects a type of pointer (text, arrow,...); here description fields 14a, 14b and arrow pointers 15a, 15b. By transforming the camera-related 3D coordinates of the object 1 into display-related coordinates and linking the pointer data with the display-related coordinates, the description fields 14a, 14b and arrow pointers 15a, 15b can be displayed at the see-through display 6 of the maintainer 3 in a way that the maintainer 3 sees the pointers 15a, 15b pointing to the selected buttons 13a, 13b. By repeating the detection and transformation steps the pointers 15a, 15b track the buttons in case the camera 11 is moving.

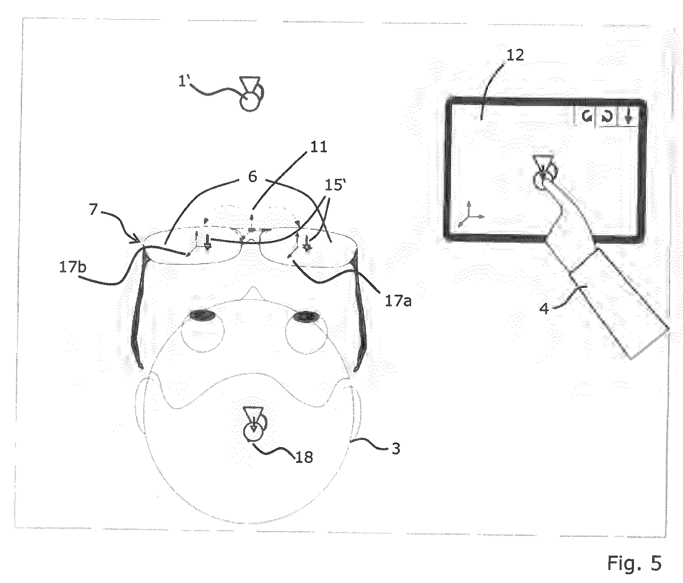

**Fig. 5** shows the maintainer 3 wearing AR-glasses 7 and looking at the object 1'. The different coordinate systems (camera coordinate system 11 and display coordinate systems **17a, 17b**) are indicated in Fig. 5. Since the AR-glasses shown in Fig. 5 comprises two glasses (one glass for each eye) a transformation of the coordinates from camera coordinate system 11 into two different display-related coordinate systems 17a, 17b is carried out. Yet, it is also possible to provide only one display. Accordingly only one coordinate transformation has to be carried out. In both cases the maintainer 3 sees a superposition **18** of the real view and the displayed pointer 15', as indicated in Fig. 5.

## Claims

1. Method for maintenance support comprising interaction between an maintainer (3) at an maintenance area and an expert (4) at a remote located expert, wherein the method comprises the following steps:
• detection of an object (1, 1') to be maintained by analyzing video data generated by a head mounted camera (2);
• streaming of the video data from the maintainer (3) to the expert (4);
• transmission of support data from the expert (3) to the maintainer (4);
**characterized in that**
• the support data comprise pointer data for creating a pointer (15a, 15b) to be displayed to the maintainer (3), wherein the pointer (15a, 15b) is assigned to the detected object (1, 1'), and
• the pointer (15a, 15b) is displayed at a see-through display (6) of augmented reality glasses (7).

2. Method according to claim 1, **characterized in**
**that** during detection camera-related 3D-coordinates of the location of the detected object (1, 1') are generated at the maintenance area and transmitted to the expert (4),
**that** the camera-related 3D-coordinates are transformed to display-related coordinates, and
**that** the display-related coordinates are transmitted to the maintenance area for displaying the pointer data.

3. Method according to one of the preceding claims, **characterized in that** detection of the object (1, 1') comprises identification of the object (1, 1').

4. Method according to one of the preceding claims, **characterized in that** the object (1, 1') is provided with a defined marker (8), in particular a QR-code, and the object is detected by detecting the marker (8) by means of the camera (2).

5. Method according to one of the preceding claims, **characterized in that** the data is transmitted wirelessly, in particular via WIFI or LIFI.

6. Maintenance support system for performing the method according to one of the preceding claims, the system comprising a head-mountable camera (2), a head-mountable see-through display (6), means for analyzing video data, means for streaming video data and transmitting pointer data, and a computer for displaying streamed video data.

7. Maintenance support system according to claim 6, **characterized in that** the camera (2) and the see-through display (6) are parts of AR-glasses (7).
